# EUROPEAN PATENT APPLICATION

(11) **EP 0 838 187 A1**
(43) Date of publication of application: **29.04.1998**
(21) Application number: 97500174.4
(22) Date of filing: 23.10.1997
(51) Int. Cl.: A47J 37/04, A47J 37/06

(54) **Device of continuous traction, for cooking by simultaneous thermal contact on both faces of flattened nutritious pieces such as hamburgers**

(30) Priority: 23.10.1996 AR 33863696
(71) Applicant: Arcusin, Carlos Eduardo, 1004 Buenos Aires (AR); Makuc, Ruben Antonio, 1004 Buenos Aires (AR)
(72) Inventor: Arcusin, Carlos Eduardo, 1004 Buenos Aires (AR); Makuc, Ruben Antonio, 1004 Buenos Aires (AR)
(74) Representative: Garcia Cabrerizo, Francisco

(57) **Abstract**

DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, of the type including a loading sector, a cooking sector and a discharge sector aligned to each other and the cooking sector constituted by two parallel heated plates being faced to each other and separated among them for such distance that allows the passage for haulage of the flattened nutritious pieces (25) such as hamburgers allowing the cooking to take place by means of transfer by thermal conduction between each heated plate and each face corresponding of the flattened pieces, being the haulage of the nutritious pieces produced by means of pushing axes (7), conveniently spaced one from the other that they move parallel and traverse respecting the heated cooking plates and solidary to the motorized traction system being the same on the outside of the loading-discharge cooking plane of the machine.

## Description

### I - BACKGROUND OF THE INVENTION

The present invention is related to a device for the cooking of nutritious pieces, in a reduced space, undcr optimal conditions and without producing smoke nor scent. In general terms, it is a machine with motorized continuous traction, with a sense of defined turn-haulage from a loading sector to a discharge sector passing through a cooking sector of the flattened nutritious pieces.

The cooking sector is constituted by two parallel heated plates and faced one to the other, both covered by an non-adherent and water proof material. These plates are separated among them at such distance that they allow the pass of the nutritious pieces flattened by haulage allowing the transfer taking place by means of thermal conduction between the heated plates and the faces corresponding to the flattened pieces.

The loading, cooking and discharge sectors result aligned to each other and the plane thus conformed will be able to be disposed in vertical or horizontal form being able, when being taken to the practice, to be mounted on any of the intermediate positions.

The traction system is the one that allows the haulage of the nutritious pieces through the heated plates. This system is constituted by a motorized axis and a dragged axis, each one of them disposed on each one of the ends of the cooking plane. Each one of these axes will count with at least one traction wheel and a haulage wheel aligned on the outside of the heated plates and joined by an endless chain of the type of links with traverse appendixes to the same, conveniently spaced one from the other and constituting the pusher axis of the flattened nutritious pieces. The pusher axis move traversally and parallel to the heated cooking plates and among them, making the nutritious pieces shift by means of pushing.

The motorized axis and that of haulage will be able to have 1 or 2 wheels of chain traction each. In the case of 2 wheels, these will drag the chain to each side of the cooking plates and the appendixes or pushing axes will join both chains conforming a mobile, endless, continuous reticulum,; in each reticulum one or more nutritious pieces will be placed on the loading area -for them to be shifted through the cooking area up to the discharge area.

In the case of a traction wheel in each axis, the chain will join each wheel and the appendixes or haulage axes will shift by the cooking plates with one of the free ends.

In the first case the system described in this way is useful for the machine designed for vertical use, given that the removal of grease of the product due to the cooking "falls" by effect of gravity and it does not interfere with the chains.

In the second case the system thus described it is useful for the machine designed for horizontal use, the removal of grease is guided towards the side where there is not chain, in such a way to avoid the interference of grease and thus to facilitate the cleaning and maintain it.

The cooking system is of double contact, that is to say that it cooks by simultaneous conduction on the plane sides of the hamburgers, the traction system drags the flattened nutritious pieces -such as hamburgers- through 2 flat heated plates and covered by a non-adherent teflonated cloth or Teflon painting for nutritious use; these hot planes contacts both faces of the nutritious pieces producing the cooking of the same at one time and at controlled temperatures. The system of double contact causes an even cooking and with very low energy loss.

Being a system of heat by means thermal transfer by conduction, the use of energy is optimal. Practically all of the thermal energy concerned passes to the piece to be cooked by contact, the loss of radiation being very low.

As it is known, the machines that cook through radiation exist but they have had inconveniences in the market due to their being high consuming, also having as inconvenience the difficulty in the control of the cooking temperature, the fire risks, etc..

As it is known, the traditional system of cooking of such nutritious pieces as hamburgers is: on a hot iron plate. This traditional system, by contact or conduction, has a series of limitations, such as the difficulty in the control of the temperature of the contact surface, difficulty in the drainage of the liquefied fat product of the cooking, difficulty to liberate the surface of remains stuck to the same, limitations in size and thus production ends, the inconvenience of the uniformity in the cooking, the necessity to turn the nutritious pieces and the generation of smoke and scent.

Important chains of "fast food" such as Mac Donald's or Wendy's, cook their hamburgers on a flat iron plate, they need to have a "cook" obligatorily to assist the cooking of the same and a working method to standardize the quality and to achieve a certain yield. At the same time they need a working method to maintain the hygiene of the iron and the product; all this generates at least a setback. They also find necessary big facilities for the extraction of the smoke and scent.

The invention of the present invention has the particularity of offering a means that makes feasible the appropriate simultations, continuous and uniform cooking of nutritious pieces, like hamburgers (rubbed, frozen, or from the refrigerator) in a reduced time, that is about the 3 minutes for piece.

The machine object of the present invention solves all the inconveniences of the traditional cooking, with a good yield, always obtaining uniform products without generating smoke and scent during the cooking.

### II - ILLUSTRATION

For better clarity of the object of the invention, it shall be illustrated with several figures, in which the same has been represented in its favorite ways of embodiment and everything simply title as an illustrative example, not limitative being:

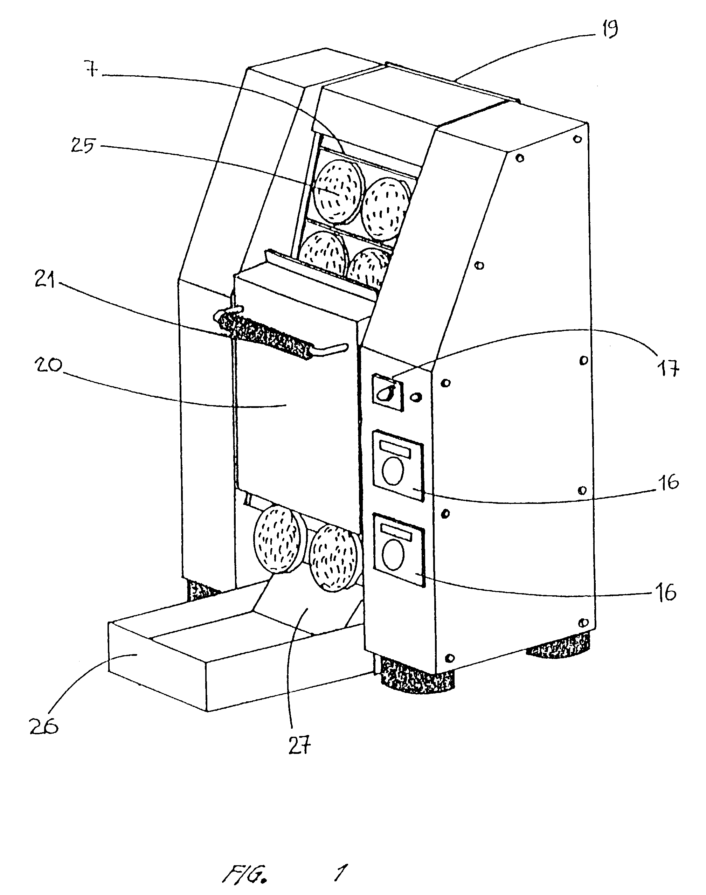

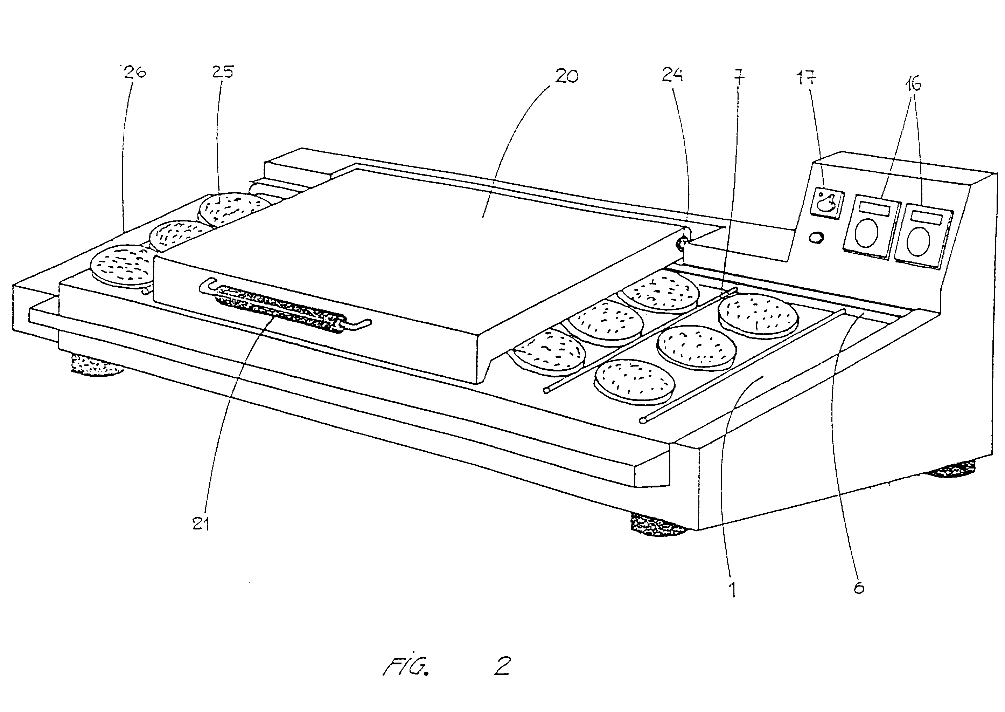

Figure 1 and figure 2 views in perspective that allow to appreciate the general constitution of the machine in two in their possible ways of embodiment, vertical and horizontal.

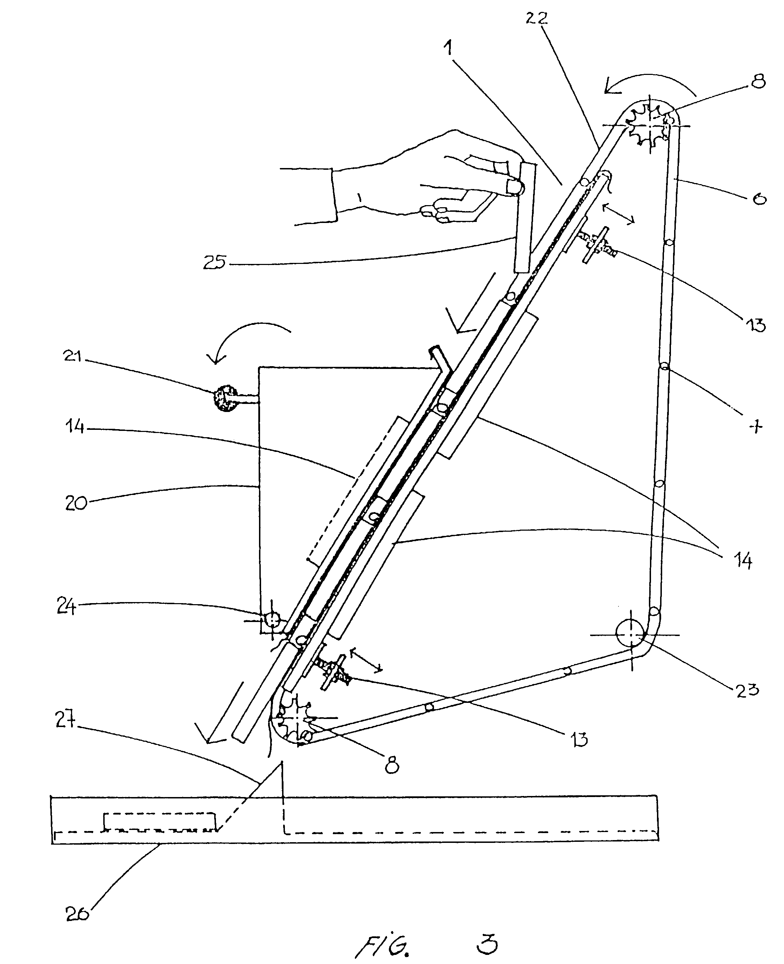

Figure 3 is an outline that synthesizes the cooking procedure and operation of the present Invention.

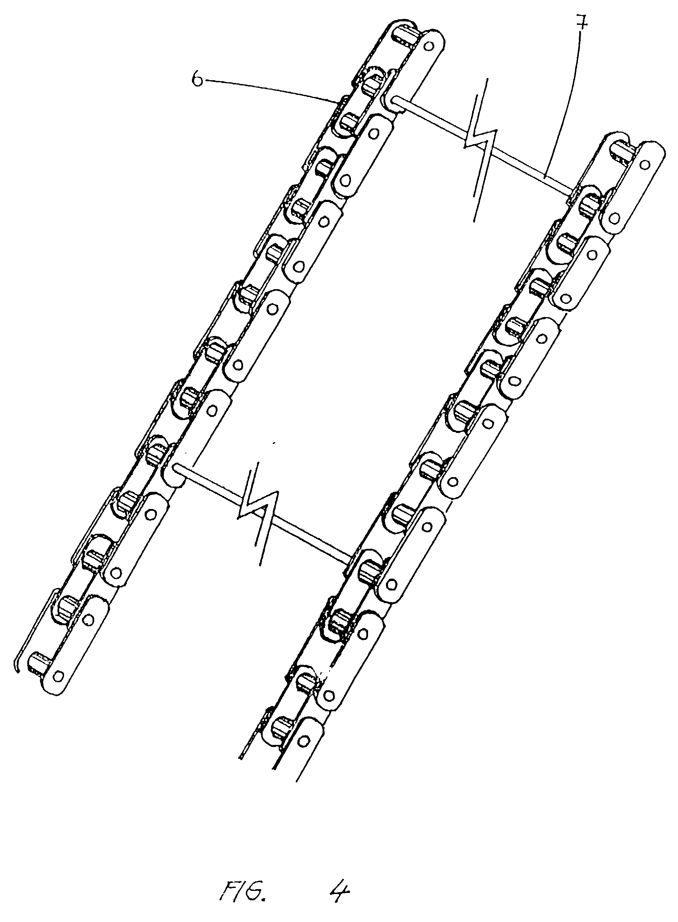

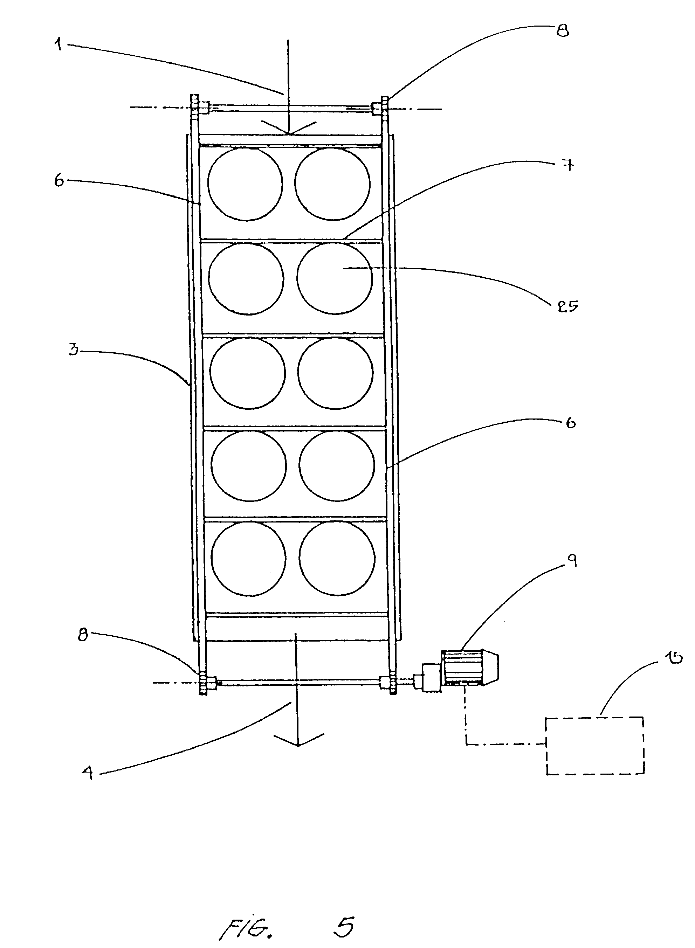

Figures 4 and 5 show the system of traction of the nutritious pieces that will cross the heated plates of the system of double contact cooking of the machine.

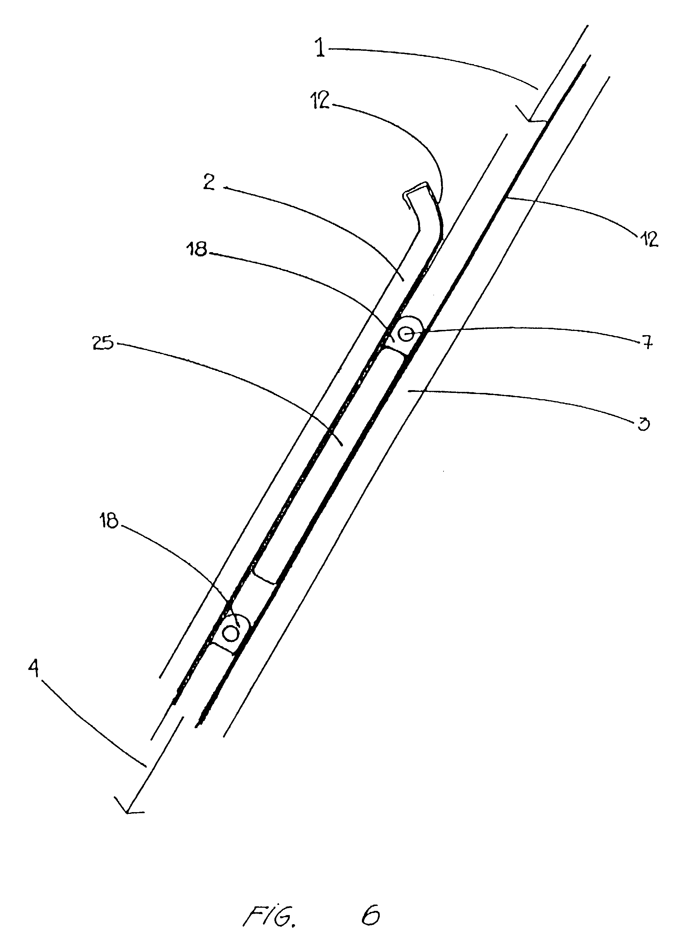

Figure 6 shows the alternative that allows the self cleaning by means of sweeping or haulage on the system of contact of the cooking area.

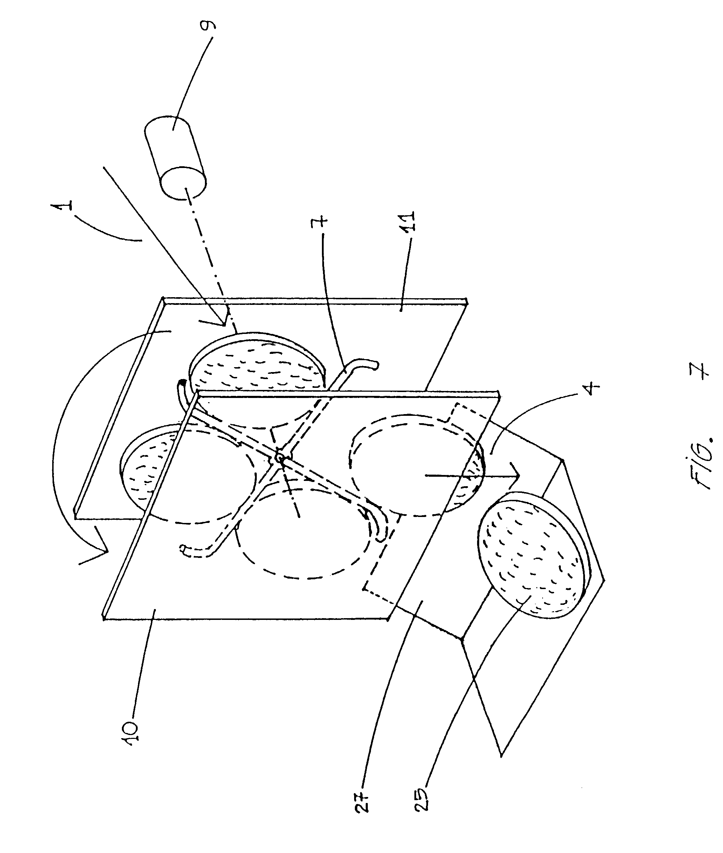

Figure 7 shows another alternative in the way of embodiment of the machine.

### LISTING OF MAIN REFERENCES

1. loading sector.

2. superior heated contact sector.

3. inferior heated contact sector.

4. discharge sector.

5. holder of the cooked product.

6. traction chain.

7. pushing axes.

8. chain wheels.

9. engine.

10. superior heated plate.

11. inferior heated plate.

12. non-adherent teflonated cloths.

13. contact regulators of the plates.

14. heaters.

15. speed controller.

16. controllers of temperature.

17. general switch.

18. self-cleaning device.

19. back lid.

20. pivoting door.

21. handle.

22. collapsible chain guides.

23. chain tensile.

24. pivot of door.

25. flattened nutritious pieces.

26. discharge foot basin.

27. discharge grill.

### III - MAIN OBJECT AND DESCRIPTION

Device for the cooking of nutritious pieces of the type that includes: a loading sector (1) of pieces (25) capable of loading in an orderly way at least one piece to be cooked, that when being loaded will already begin the cooking process that will be dragged by the pushing axis (7) solidary to at least one traction chain (6) that are mobilized through the wheels (8) by the engine (9). The piece or nutritious pieces cross the cooking sector (2) (3) maintaining contact with the heated plates (10) (11), which are covered by teflonated or painted cloths (12), said plates being heated by the heaters (14). One of the plates (11) being adjustable in a parallel manner respecting the direction of traction of the pieces to be cooked and the other one being disposed on a pivoting door (20) by means of the pivot (24).

The discharge sector (4) allows that the pieces already cooked to fall on the grill (27) on the food-basin (26) at the end of the process.

For the control of the process are described the general switch (17), the controllers of temperature (16) and the variator of speed (15) that can be optional.

The back door (19) allows the access to the sector of the plate of inferior heating (11) for cleaning and control.

## Claims

1. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, of the type including a loading sector, a cooking sector and a discharge sector aligned to each other and the cooking sector constituted by two parallel heated plates being faced to each other and separated among them for such distance that allows the passage for haulage of the flattened nutritious pieces such as hamburgers allowing the cooking to take place by means of transfer by thermal conduction between each heated plate and each face corresponding of the flattened pieces, being the haulage of the nutritious pieces produced by means of pushing axes, conveniently spaced one from the other that they move parallel and traverse respecting the heated cooking plates and solidary to the motorized traction system being the same on the outside of the loading-discharge cooking plane of the machine.

2. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, according to claim 1, characterized because the traction system is constituted by a motorized axis and a dragged axis, each one of them disposed in each end of the cooking plane and outside of the same.
Each one of these axes have 2 indented wheels each one, aligned at the sides of the cooking plane and outside of the same. Each traction and haulage wheel is joined by an endless chain with lateral appendixes perpendicular to the spaced chain and that they join the chains of one and the other side. The appendixes solidary to the chains constitute the axes that push the flattened nutritious pieces through the opposcd cooking plates.

3. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, according to claim 2, characterized because each traction and haulage wheel is joined by a chain with conveniently spaced perpendicular appendixes and that they join the chains of one and the other lateral of the cooking plane conforming a mobile endless reticulum each one of which allows to harbor and to drag at least one flattened nutritious piece from the loading area towards the discharge area going by the cooking area.

4. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, according to claim 1, characterized because the dragged axis and the one motorized possesses, each one of them a jagged wheel, aligned laterally to the cooking plane and on the outside of the same and joined to each other by an endless chain with conveniently spaced lateral appendixes and that constitute the axes of haulage of the flattened nutritious pieces through the opposed heated cooking plates.

5. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, according to claim 1, characterized because, structurally the machine is developed in vertical form being the loading area in the superior part of the device, the cooking area in the central part and the discharge area in the inferior part, the mobile haulage reticulum moving downwards and endlessly.

6. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, according to claim 1, characterized because the cooking sector is constituted by two parallel heated plates and faced to each other and covered by non-adherent cloths.

7. DEVICE OF CONTINUOUS TRACTION, FOR COOKING BY SIMULTANEOUS THERMAL CONTACT ON BOTI-I FACES OF FLATTENED NUTRITIOUS PIECES SUCH AS HAMBURGERS, according to claim 1, characterized because the cooking sector is constituted by two heated plates and painted with Teflon painting of nutritious use.

8. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, according to claim 6, characterized because the heated plates are covered by non-adherent and waterproof cloths.

9. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, according to claim 1, characterized because the cooking heated plates are electrically and thermally controlled by pyrometers of proportional band.

10. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, according to claim I, characterized because the traction system is worked by an electric motor controlled by a variator of speed.

11. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, according to claim 1, characterized because structurally, the machine is developed in horizontal form being the loading area in one of the sides, the cooking area at the center and the discharge area in the opposed side to that of loading area, moving the mobile haulage reticulum in an endless way left to right or vice versa.

12. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, according to claim 1, characterized because one of the heated cooking plates is mounted on a pivoting door whose opening facilitates the inspection and cleaning.

13. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, according to claim 1, characterized because one of the heated cooking plates possesses regulators of parallelism to bring near or to move away said plate to or from the opposed one allowing to adjust the separation among them in accordance to the thickness of the flattened nutritious piece to be cooked.

14. DEVICE OF CONTINUOUS TRACTION, FOR COOKING BY SIMULTANEOUS THERMAL CONTACT ON BOTH FACES OF FLATTENED NUTRITIOUS PIECES SUCH AS HAMBURGERS, according to claim 2, characterized because the pushing axes solidary to the traction chain contain a device of self cleaning of the plates of double contact composed by at least one profile of sheared section.
